(19) Europäisches Patentamt
European Patent Office
Office européen des brevets

(11) **EP 4 124 524 B1**

(12) **EUROPÄISCHE PATENTSCHRIFT**

(45) Veröffentlichungstag und Bekanntmachung des Hinweises auf die Patenterteilung:
**15.10.2025 Patentblatt 2025/42**

(21) Anmeldenummer: **22166667.0**

(22) Anmeldetag: **05.04.2022**

(51) Internationale Patentklassifikation (IPC):
**B60T 8/17** (2006.01)  **B60T 8/24** (2006.01)
**B60W 30/18** (2012.01)

(52) Gemeinsame Patentklassifikation (CPC):
**B60T 8/1708; B60T 8/248; B60W 30/18072;**
B60T 2201/16; B60T 2230/06; B60T 2270/86;
B60W 2300/12; B60W 2300/13; B60W 2300/152

(54) **LANDWIRTSCHAFTLICHER ZUG**

AGRICULTURAL TRAIN

TRAIN AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2021 DE 102021119819**

(43) Veröffentlichungstag der Anmeldung:
**01.02.2023 Patentblatt 2023/05**

(73) Patentinhaber: **CLAAS Tractor S.A.S.**
**78141 Vélizy-Villacoublay Cedex (FR)**

(72) Erfinder:
• **Schütte, Robin**
**33142 Büren-Weine (DE)**
• **Ehlert, Christian**
**33719 Bielefeld (DE)**
• **Erger, Lars**
**34331 Marsberg (DE)**

(74) Vertreter: **CLAAS Gruppe**
**Mühlenwinkel 1**
**33428 Harsewinkel (DE)**

(56) Entgegenhaltungen:
EP-A1- 3 533 673    EP-A2- 3 216 333
WO-A1-2013/004315    DE-A1- 102014 100 069
DE-A1- 19 964 045    US-A1- 2014 218 506

• LIANG CHU ET AL: "Estimation of Articulation Angle for Tractor Semi-trailer Based on State Observer", 2010 INTERNATIONAL CONFERENCE ON MEASURING TECHNOLOGY AND MECHATRONICS AUTOMATION : ICMTMA 2010 ; CHANGSHA CITY, CHINA, 13 - 14 MARCH 2010, IEEE, PISCATAWAY, NJ, USA, 13 March 2010 (2010-03-13), pages 158 - 163, XP031673229, ISBN: 978-1-4244-5001-5

**Beschreibung**

Die vorliegende Erfindung betrifft einen landwirtschaftlichen Zug gemäß dem Oberbegriff des Anspruches 1.

Ein landwirtschaftlicher Zug besteht aus einem Traktor als Zugfahrzeug, welcher durch einen mit einem stufenlosen Getriebe zusammenwirkenden Antriebsmotor angetrieben ist, und mindestens einer an den Traktor in einem Koppelpunkt angekoppelten Anhänger. Bei dem Anhänger kann es sich um ein landwirtschaftliches Anbaugerät wie beispielsweise eine Ballenpresse oder einen Transportwagen, Ladewagen oder dergleichen handeln. Neben zunehmenden maximalen Fahrgeschwindigkeiten der Traktoren aufgrund höherer Antriebsleistungen haben sich die Gewichtsverhältnisse zwischen dem Traktor und dem gezogenen Anhänger verändert. Der gezogene Anhänger kann beladen ein Mehrfaches des Leergewichts des Traktors aufweisen. Soll bei einer Bergabfahrt eines solchen Zuges die Fahrgeschwindigkeit alleine durch das Verstellen der Motordrehzahl und der Getriebeübersetzung verringert werden, wird die gesamte Masse des landwirtschaftlichen Zuges durch die Antriebsachse des Traktors verzögert. Dabei besteht die Gefahr, dass die Antriebsachse überbremst wird und der Schlupf signifikant ansteigt, was im Extremfalls zum Einknicken des landwirtschaftlichen Zuges führen kann. Zudem besteht in solchen Fahrsituationen die Gefahr, in denen die Verzögerung allein durch das Schleppmoment des Antriebsmotors erzeugt wird, dass der Antriebsmotor überdreht und damit beschädigt wird.

Ein landwirtschaftlicher Zug der eingangs genannten Art ist aus der EP 2 269 880 B1 bekannt. Das Zugfahrzeug weist eine Steuervorrichtung auf, welche zur Bestimmung des Vorliegens eines Schubbetriebes in Abhängigkeit mindestens eines Betriebsparameters des Getriebes und/oder des Antriebsmotors eingerichtet ist. Dazu werden eine Differenz aus einer Ist-Motordrehzahl des Zugfahrzeugs und einer vorgebbaren Soll-Motordrehzahl sowie aus einer Druckdifferenz an einem hydrostatischen Fahrantrieb als ein Maß für eine Schubwirkung eines Anhängers am Koppelpunkt bestimmt.

Bei Kurvenfahrten des landwirtschaftlichen Zuges kommt es zu einer Aufteilung der Kräfte im Koppelpunkt, wenn der Traktor und der Anhänger einknicken. Durch die Bestimmung der auftretenden Kräfte im Koppelpunkt nur anhand der Betriebsparameter des Getriebes und/oder des Antriebsmotors wird nur der in Längsrichtung des Traktors wirkende Kräfteanteil erkannt, so dass die Ansteuerung der Bremsanlage des Anhängers mit abweichenden Parametern erfolgt.

Ein weiteres Beispiel von einem gattungsgemäßen landwirtschaftlichen Zug ist aus EP 3 533 673 A1 bekannt.

Es ist somit die Aufgabe der Erfindung, einen landwirtschaftlichen Zug der eingangs genannten Art, mit einem Traktor als Zugfahrzeug und mindestens einem gezogenen Anhänger, derart weiterzubilden, welcher eine Verbesserung der Fahrsicherheit bietet.

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung ergeben sich aus den nachstehenden Unteransprüchen und der nachfolgenden Beschreibung.

Gemäß dem Anspruch 1 wird ein landwirtschaftlicher Zug vorgeschlagen, wobei der Zug einen Traktor als Zugfahrzeug, der durch einen mit einem stufenlosen Getriebe zusammenwirkenden Antriebsmotor angetrieben ist und eine erste Bremsanlage aufweist, und mindestens einen an den Traktor in einem Kuppelpunkt angekoppelten Anhänger mit einer zweiten Bremsanlage, umfasst, wobei der Traktor zur Regelung mindestens einer Bremsanlage des landwirtschaftlichen Zuges eine Steuervorrichtung aufweist, wobei die Steuervorrichtung zur Betätigung mindestens einer der Bremsanlagen des Zuges in Abhängigkeit eines ermittelten Schubbetriebes des Zuges und/oder Zugfahrzeuges ausgebildet und eingerichtet ist, wobei die Steuervorrichtung weiterhin zur Bestimmung des Vorliegens eines Schubbetriebes in Abhängigkeit mindestens eines Betriebsparameters des Getriebes und/oder des Antriebsmotors eingerichtet ist. Erfindungsgemäß ist vorgesehen, dass die Steuervorrichtung zur Berechnung eines Korrekturfaktors in Abhängigkeit von einem beim Vorliegen eines Schubbetriebes detektierten Lenkwinkel eingerichtet ist, um eine aus dem mindestens einen Betriebsparameter bestimmte Koppelkraft im Kuppelpunkt unter Berücksichtigung des Lenkwinkels zu korrigieren.

Der vorschlagsgemäßen Erfindung liegt die Erkenntnis zugrunde, dass bei Kurvenfahrten mit bereits eingeknicktem Zug die im Kuppelpunkt auftretenden Kräfte in Komponenten aufgeteilt werden, die in Abhängigkeit vom sich einstellenden Knickwinkel in Längsrichtung und in Querrichtung wirken. Bei der Bestimmung des Vorliegens eines Schubbetriebes in Abhängigkeit des mindestens einen Betriebsparameters des Getriebes und/oder des Antriebsmotors werden nur die in Längsrichtung des Zuges wirkenden Kräfte erkannt. Durch die Berechnung eines Korrekturfaktors in Abhängigkeit von einem beim Vorliegen eines Schubbetriebes detektierten Lenkwinkel wird die in Längsrichtung wirkende Kraftkomponente der durch die Steuervorrichtung bestimmten Koppelkraft korrigiert, um eine der Fahrsituation entsprechende Ansteuerung der zweiten Bremsanlage zu bewirken. Auf diese Weise lassen sich kritische Fahrsituationen, insbesondere das Einknicken des Zuges beim Überbremsen, auch als Jackknifing bezeichnet, vermeiden. Die Steuervorrichtung kann entsprechend früher auf diese Fahrsituation reagieren. Hierbei können Bremsanlagen eines oder, sofern vorhanden, mehrerer gezogener Anhänger unabhängig von der ersten Bremsanlage des Traktors durch die Steuervorrichtung betätigt werden. Dadurch wird eine Verzögerung des Anhängers und eine Verringerung des Schubes auf den Traktor erreicht, wodurch eine Streckung des Zuges bewirkt wird und ein kritischer Fahrzustand des Zuges vermieden werden kann.

Zur Bestimmung des Lenkwinkels ist erfindungsgemäß ein Lenkrad des Traktors mit einem zugeordneten Lenkwinkelgeber vorgesehen, welcher den Lenkwinkel als Steuersignal für die Steuervorrichtung vorgibt. Erfindugsgemäß ist die Steuervorrichtung beim Vorliegen eines Schubbetriebes dazu eingerichtet, die von der zweiten Bremsanlage erzeugte Bremskraft proportional zum detektierten Lenkwinkel anzusteuern.

Insbesondere kann das stufenlose Getriebe als mechanisches oder hydrostatisches Getriebe ausgeführt sein. So kann ein stufenloses Getriebe in Form eines leistungsverzweigten hydraulisch-mechanischen, eines elektrisch-mechanischen, eines rein hydraulischen oder eines rein elektrischen Getriebes ausgebildet sein. Vor allem bei einem stufenlosen hydrostatischen Getriebe mit Leistungsverzweigung lässt sich das Auftreten von kritischen Fahrsituationen vermeiden, die auf ein starkes Verzögern durch eine Verstellung von Motordrehzahl und Getriebeübersetzung zurückzuführen sind.

Bevorzugt kann die Steuervorrichtung dazu eingerichtet sein, ein Abtriebsdrehmoment und/oder ein Stützmoment des stufenlosen hydrostatischen Getriebes aus einer Druckdifferenz in einem hydrostatischen Teilgetriebe des Getriebes zu bestimmen. So kann bei einem hydraulisch-mechanischen stufenlosen Getriebe mittels geeigneter Sensorik das Abtriebsdrehmoment, dessen Größe und/oder Richtung, als Getriebeparameter ermittelt werden. Das ermittelte Abtriebsdrehmoment kann genutzt werden, um einen Schubbetrieb zu erkennen, beispielsweise in Abhängigkeit von der Richtung des Abtriebsdrehmomentes. Bei einem mechanischen oder hydrostatischen stufenlosen Getriebe und/oder einem Lastschaltgetriebe kann beispielsweise das Stützmoment des Getriebes als Getriebeparameter ermittelt werden. Das Stützmoment, welches beispielsweise von einer Drehzahl des Antriebsmotors, einer Getriebeübersetzung und/oder einem Getriebewirkungsgrad abhängig ist, kann mittels einer Kennlinie, insbesondere einer Schleppkennlinie, bestimmt werden. Vorteilhaft bei derartigen Getriebeparametern ist die Möglichkeit der Nutzung bereits vorhandener Bauteile und/oder einer kostengünstigen Nachrüstung einzelner Sensoren, welche eine einfache und zuverlässige Bestimmung des oder der Betriebsparameter ermöglichen.

Dabei kann das aus der Druckdifferenz des hydrostatischen Teilgetriebes bestimmte Abtriebsdrehmoment als Führungsgröße bei der Ansteuerung der zweiten Bremsanlage dienen. So kann ein hydraulisch-mechanisches stufenloses Getriebe einen Hydrostaten in Weitwinkelbauweise aufweisen. Dies hat den Vorteil, dass zur Ansteuerung der der zweiten Bremsanlage lediglich ein elektronisch ansteuerbares Anhängerbremsventil erforderlich ist, da das Abtriebsdrehmoment, welches aus der Druckdifferenz des hydrostatischen Teilgetriebes bestimmbar ist, als Führungsgröße bei der Ansteuerung der zweiten Bremsanlage verwendet werden kann.

Gemäß einer bevorzugten Weiterbildung kann die Steuervorrichtung eine Eingabe-Ausgabe-Einheit umfassen, welche zur Eingabe und/oder Auswahl zumindest eines das Bremsverhalten des Anhängers beeinflussenden Parameters eingerichtet ist. So kann eine Bedienperson des Traktors durch die Eingabe zumindest eines das Bremsverhalten des Anhängers beeinflussenden Parameters Einfluss auf das Bremsverhalten des Zuges nehmen.

Hierzu kann der zumindest eine Parameter aus der Gruppe Geometrie des Anhängers, Anzahl des angekoppelten Anhänger, Beladungszustand, Umweltparameter, Zustand und/oder Leistungsfähigkeit der zweiten Bremsanlage sein. Der Begriff Geometrie des Anhängers soll dabei neben den Abmessungen auf den Typ des Anhängers wiedergeben. So kann die Bedienperson beispielsweise durch manuelle Eingabe und/oder Auswahl herstellerspezifischer Angaben den oder die angekoppelten Anhänger auswählen, die von dem Traktor gezogen werden. Es können Umweltparameter wie das Wetter, der Zustand des zu befahrenden Untergrunds eingegeben werden. Weiterhin kann eine Eingabe den Zustand und/oder die Leistungsfähigkeit der zweiten Bremsanlage des Anhängers betreffend durchgeführt werden.

Weiterhin kann der zumindest eine Parameter ein vorgebbarer Verstärkungsfaktor zur Einstellung der von der zweiten Bremsanlage aufgebrachten Bremskraft sein. Mittels des vorgebbaren Verstärkungsfaktors kann auf das Bremsverhalten Einfluss genommen werden.

Dabei kann der vorgebare Verstärkungsfaktor einen Wert größer Null haben. Dabei kann ein Verstärkungsfaktor zwischen Null und kleiner Eins dazu dienen, die Bremskraft abzuschwächen, während ein Verstärkungsfaktor größer Eins der Verstärkung der Bremskraft dient. Durch das Einstellen des Verstärkungsfaktors größer Eins lässt sich ein aggressiveres Bremsverhalten erreichen. Durch den vorgebbaren Verstärkungsfaktor kann dem Einfluss des zumindest einen Parameters aus der Gruppe Geometrie des Anhängers, Anzahl der angekoppelten Anhänger, Umweltparameter, Zustand und/oder Leistungsfähigkeit der zweiten Bremsanlage des Anhängers Rechnung getragen werden.

Erfindungsgemäß ist die Steuervorrichtung zur Berechnung eines theoretischen Knickwinkels im Kuppelpunkt unter Verwendung eines mathematischen Modells eingerichtet.

Hierfür umfasst die Steuervorrichtung einen Speicher zur Hinterlegung von Daten sowie eine Recheneinheit zu Verarbeitung der in dem Speicher hinterlegten Daten. Die Steuervorrichtung kann mit einer Antriebsmotorsteuereinheit des Antriebsmotors und/oder einer Getriebesteuereinheit des Getriebes signaltechnisch verbunden sein, um zusätzliche Informationen über den aktuellen Betriebszustand des Traktors zu empfangen und erforderlichenfalls auszuwerten.

Die vorliegende Erfindung wird nachstehend anhand eines in den Zeichnungen dargestellten Ausführungsbeispieles näher erläutert.

Es zeigen:

Fig. 1    eine schematische Darstellung eines landwirtschaftlichen Zuges mit einem Zugfahrzeug und einem daran gekoppelten Anhänger;

Fig. 2    (a) bis (d) exemplarisch und schematisch einen landwirtschaftlichen Zug mit einem Zugfahrzeug und daran angekoppelten Anhängern bei einer Gefällefahrt, in der sich eine kritische Fahrsituation ausbildet; und

Fig. 3    schematisch den bei einer Kurvenfahrt eingeknickten Zug gemäß Fig. 1.

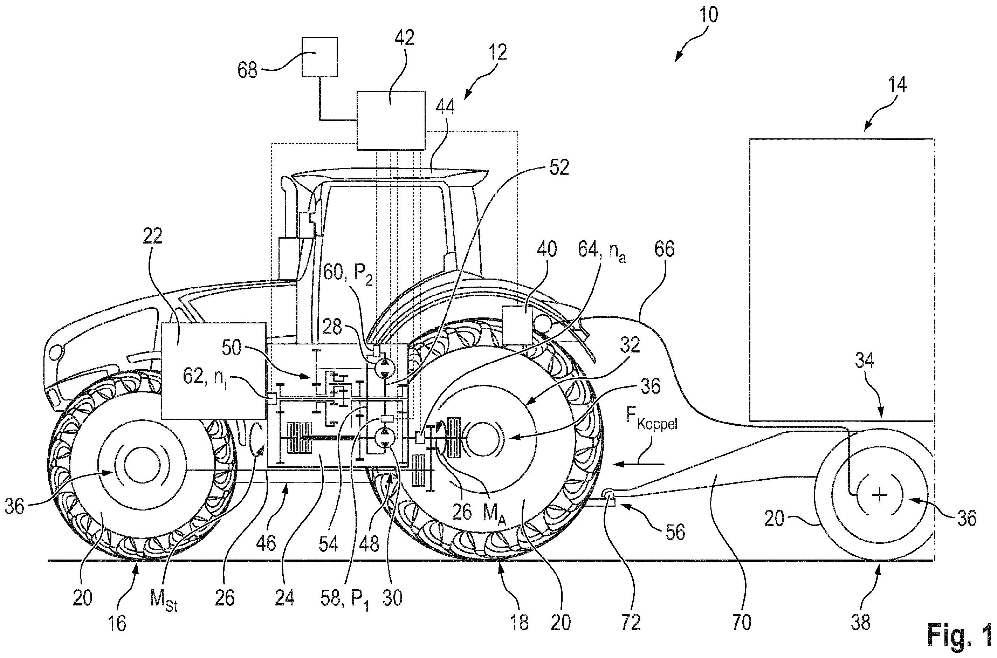

In Fig. 1 ist eine schematische Darstellung eines landwirtschaftlichen Zuges 10 mit einem als Traktor 12 ausgeführten Zugfahrzeug und einem daran angekoppelten Anhänger 14 gezeigt. Der Anhänger ist 14 ist an einer Kupplung 56 des Traktors 12 angekoppelt. Der Traktor 12 ist gegenüber dem Boden durch jeweils an einer Vorderachse 16 und einer angetriebenen Hinterachse 18 angeordnete Bodeneingriffsmittel 20 in Form von Rädern abgestützt. Die Bodeneingriffsmittel 20 können auch in Form von Raupenlaufwerken ausgebildet sein. Zum Antrieb der Bodeneingriffsmittel 20 weist der Traktor 12 einen Antriebsmotor 22 auf, welcher durch ein hier und vorzugsweise stufenloses leistungsverzweigtes Getriebe 24 mit einem Antriebsstrang 26 verbunden ist.

Um den landwirtschaftlichen Zug 10 zu verzögern, weist der Traktor 12 eine erste Bremsanlage 32 und der mindestens eine Anhänger 14 eine zweite Bremsanlage 34 auf. Mehrere Anhänger 14 können jeweils eine eigene Bremsanlage 34 aufweisen. Die Bremsanlage 32 des Traktors 12 kann eine Betriebsbremse, welche beispielsweise durch Betätigung eines Bremspedals durch eine Bedienperson betätigbar ist, eine Feststellbremse und/oder eine Hilfsbremse umfassen. Die Bremsanlage 34 des Anhängers 14 umfasst jeweils mindestens eine Bremse 36, welche auf eine Anhängerachse 38 und/oder auf jeweils ein Bodeneingriffsmittel 20 des Anhängers 14 wirkt. Zudem kann die zweite Bremsanlage 34 über mindestens ein elektronisch ansteuerbares Anhängerbremsventil 40 angesteuert werden, wobei das Anhängerbremsventil 40 anhängerseitig oder zugfahrzeugseitig angeordnet sein kann. Mittels einer Bremsleitung 66 wird ein zum Bremsen benötigtes Fluid, beispielsweise Druckluft, von dem Traktor 12 zum Anhänger 14 geleitet. Der Anhänger 14 ist mittels einer Deichsel 70 mit dem Zugfahrzeug 12 im Kuppelpunkt 72 durch die Kupplung 56 verbunden. An den Anhängerachsen 38 ist jeweils mindestens eine Bremse 36 angeordnet, wobei beispielsweise die Anhängerachsen 38 und/oder die Bodeneingriffsmittel 20 unabhängig voneinander abbremsbar sind.

Die erste Bremsanlage 32 des Traktors 12 und die zweite Bremsanlage 34 des Anhängers 14 sind jeweils mit einer Steuervorrichtung 42 des Traktors 12 zur Regelung der Bremsanlagen 32, 34 verbunden. In einer Fahrerkabine 44 des Zugfahrzeuges 12 kann eine Eingabe-Ausgabe-Einheit 68 angeordnet sein, die mit der Steuervorrichtung 42 verbunden ist.

Das stufenlose leistungsverzweigte Getriebe 24 weist ein mechanisches Teilgetriebe 46 und ein hydraulisches bzw. hydrostatisches Teilgetriebe 48 auf. Ausgehend von einem in das Getriebe 24 eingehenden Antriebsdrehmoment wird an einer Abtriebswelle des Getriebes 24 ein Abtriebsdrehmoment $M_A$ bereitgestellt, welches in Abhängigkeit eines Wirkungsgrades des Getriebes 24 und der Getriebeübersetzung regelbar ist.

Zur Verzweigung der in das Getriebe 24 eingehenden Leistung von dem Antriebsmotor 22 weist das Getriebe 22 ein Planetengetriebe 50 auf, durch welches ein Teil der Leistung über das mechanische Teilgetriebe 46 und ein anderer Teil über das hydrostatische Teilgetriebe 48 in den Antriebsstrang 26 eingeleitet wird. Die in das hydrostatische Teilgetriebe 48 eingehende Leistung treibt, insbesondere fahrtrichtungsabhängig, den ersten Hydrostaten 28 an, welcher als Pumpe wirkt. Dieser erste Hydrostat 28 ist durch eine erste Hydraulikleitung 52 und eine zweite Hydraulikleitung 54 hydraulisch mit dem zweiten Hydrostaten 54 verbunden, welcher dann als Motor wirkt und die Leistung ebenfalls dem Antriebsstrang 26 bereitstellt. Durch die stufenlos verstellbaren Hydrostaten 28, 30, insbesondere in Weitwinkelbauweise, wird die stufenlose Regelung der Getriebeübersetzung ermöglicht.

Das Abtriebsdrehmoment $M_A$ des hydraulisch-mechanisch stufenlosen Getriebes 24, insbesondere dessen Richtung und/oder Größe, kann durch Drucksensoren 58, 60 ermittelt werden, welche an den Hydraulikleitungen 52, 54 angeordnet sind, welche die Hydrostaten 28, 30 hydraulisch verbinden. Ein erster Drucksensor 58 ist dabei an der ersten Hydraulikleitung 52 angeordnet, und ein zweiter Drucksensor 60 an der zweiten Hydraulikleitung 54. Liegt kein Schubbetrieb vor, so ist beispielsweise der Druck $P_1$ in der ersten Hydraulikleitung 54 größer als der Druck $P_2$ in der zweiten Hydraulikleitung 54. Dieses Druckverhältnis kehrt sich um, sobald Schubbetrieb eintritt, so dass im Schubbetrieb, bei unveränderter Fahrtrichtung, der Druck $P_2$ größer ist als der Druck $P_1$. Die Größe der Druckdifferenz entspricht dabei der Größe des Abtriebsdrehmomentes $M_A$ am Ausgang des Getriebes 24. Dadurch sind anhand der Druckdifferenz in den Hydraulikleitungen 52, 54 sowohl das Vorliegen eines Schubbetriebs als auch dessen Größe bestimmbar. Dies ist ebenfalls denkbar bei einem stufenlosen hydraulisch-mechanischen Getriebe 24 mit Hydrostaten in sogenannter back-to- back Bauweise. Bei einem mechanischen oder hydrostatischen stufenlosen Getriebe 24 und/oder einem Lastschaltgetriebe kann beispielsweise das Stützmoment $M_{St}$ des Getriebes 24 als Getriebeparameter ermittelt werden. Das Stützmoment $M_{St}$, welches beispielsweise von einer Drehzahl des Antriebsmotors 22, einer Getriebeübersetzung und/oder einem Getriebewirkungsgrad abhängig ist, kann mittels einer Kennlinie, insbesondere einer Schleppkennlinie, bestimmt werden. Das Stützmoment $M_{St}$ ist dabei die Differenz zwischen dem Antriebsdrehmoment und dem Abtriebsdrehmoment

$M_A$ des Getriebes 24. Die Drehzahl des Antriebsmotors 22 ist mittels eines ersten Drehzahlsensors 62, beispielsweise an einer Eingangswelle des Getriebes 24 messbar. Durch einen zweiten Drehzahlsensor 64 an der Abtriebswelle des Getriebes 24 kann die Abtriebsdrehzahl $n_a$ und damit zusammen mit der Eingangsdrehzahl $n_i$ bzw. Drehzahl $n_i$ des Antriebsmotors 22 die Getriebeübersetzung ermittelt werden.

Das Erkennen des Vorliegens eines Schubbetriebes durch die Steuervorrichtung 42 bewirkt, dass diese die Bremsanlage 34 des Anhängers 14 automatisch ansteuert.

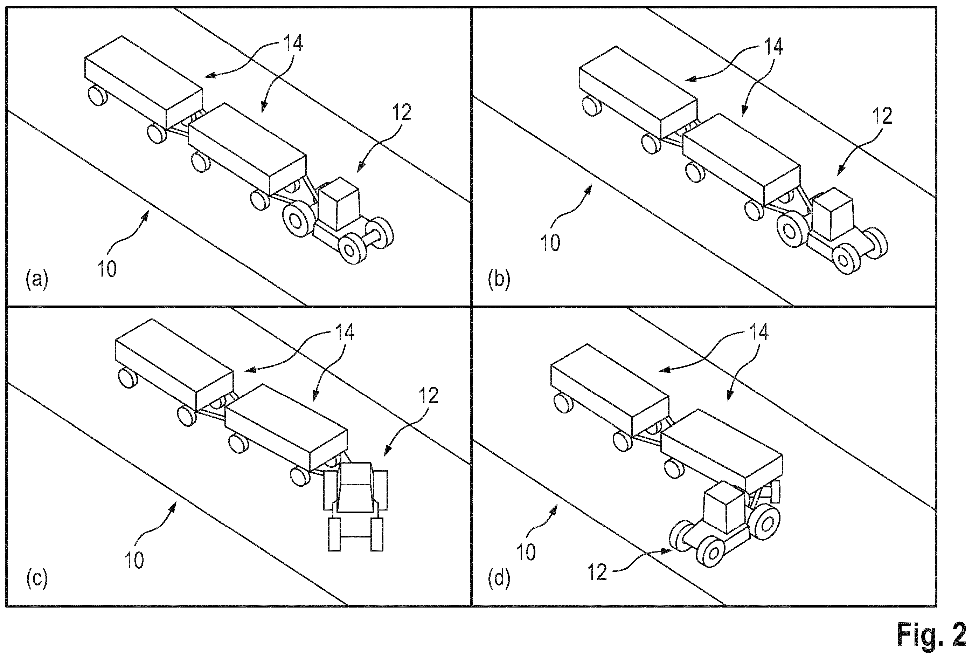

In Fig. 2 (a) bis (d) ist exemplarisch und schematisch den landwirtschaftlich Zug 10 mit dem Traktor 12 als Zugfahrzeug und zwei daran angekoppelten Anhängern 14 bei einer Gefällefahrt, in der sich eine kritische Fahrsituation ausbildet, dargestellt. Das Verzögern des Zuges 10 alleine durch die Verstellung der Motordrehzahl und der Getriebeübersetzung führt dazu, dass die gesamte Masse des Zuges 10, wobei die Masse nur eines beladenen Anhängers 14 bereits die Masse des Traktors 12 übersteigen kann, allein durch die angetriebene Hinterachse 18 des Traktors 12 abgebremst wird. Durch ein Überbremsen der angetriebenen Hinterachse 18 kann der Schlupf an den Bodeneingriffsmittel 20 respektive Reifen des Traktors 12 stark ansteigen, was zu einer Verringerung der Fahrstabilität führt. Im Extremfall kommt es im dabei auftretenden Schubbetrieb zum Einknicken des Zuges 10, wie in den Fig. 2(c) und 2(d) dargestellt.

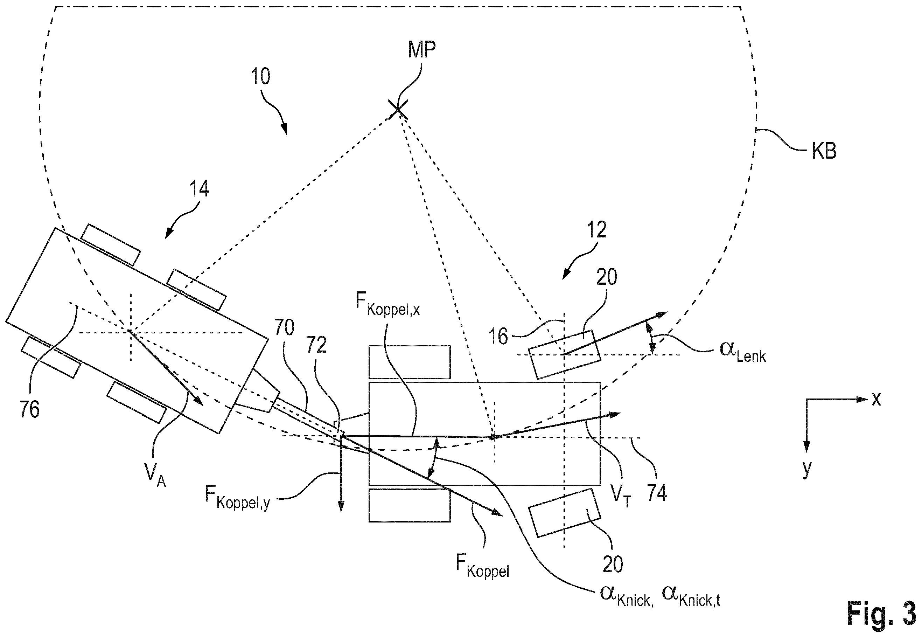

Die Darstellung in Fig. 3 zeigt schematisch den bei einer Kurvenfahrt aufgrund eines Lenkbefehls eingeknickten Zug 10 gemäß Fig. 1. Mit MP ist ein Momentanpol bezeichnet, welcher als Bezugspunkt des sich auf einer Kurvenbahn KB bewegenden Zuges 10 dient. Ein zweidimensionales Koordinatensystem dient der Veranschaulichung einer Längsrichtung x und einer Querrichtung y.

Der Zug 10 bewegt sich entlang einer Kurvenbahn KB, welche sich aufgrund eines einen eingestellten Lenkwinkels $\alpha_{Lenk}$ ergibt. Der Traktor 12 weist eine Längsachse 74 und der Anhänger 14 weist eine Längsachse 76 auf. Im Mittelpunkt des Traktors 12 bzw. des Anhängers 14 greifen Geschwindigkeitsvektor $v_T$ des Traktors 12 bzw. $v_A$ des Anhängers 14 an. Am kurveninneren Bodeneingriffsmittel 20 der Vorderachse 16 ist der Lenkwinkel $\alpha_{Lenk}$ veranschaulicht. Infolge der Lenkbewegung mit dem Lenkwinkel $\alpha_{Lenk}$ kommt es im Kuppelpunkt 72 zum Einknicken des Zuges 10. Die Längsachse 74 des Traktors 12 und die Längsachse 76 des Anhängers 14 verlaufen unter einen Knickwinkel $\alpha_{Knick}$ geneigt zueinander. Eine im Kuppelpunkt 72 bei einem Schubtrieb erzeugte Koppelkraft, dargestellt durch den Kraftvektor $F_{Koppel}$, wirkt in Richtung der Längsachse 76 des Anhängers 14. Wegen des Knickwinkels $\alpha_{Knick}$ wirkt die Koppelkraft $F_{Koppel}$ nur anteilig mit einer Kraftkomponente $F_{Koppel,x}$ in Längsrichtung x, d.h. Richtung der Längsachse 74 des Traktors 12. Eine weitere Kraftkomponente $F_{Koppel,y}$ wirkt in Querrichtung y, d.h. senkrecht zur Längsachse 74 des Traktors 12.

Die weiter oben beschriebene Bestimmung des Vorliegens eines Schubbetriebes des Zuges 10 erfasst nur die Kraftkomponente $F_{Koppel,x}$, welche in Längsrichtung x des Traktors 12 wirkt. Somit ist die tatsächliche Koppelkraft $F_{Koppel}$ im Kuppelpunkt 72 größer als die zur Bestimmung des Vorliegens eines Schubbetriebes bestimmte Kraftkomponente $F_{Koppel,x}$. Die Koppelkraft $F_{Koppel}$ im Kuppelpunkt 72 lässt sich gemäß der Gleichung

$$F_{Koppel} = \frac{F_{Koppel,x}}{\cos \alpha_{knick}} \ (1.1)$$

bestimmen.

Dabei ist der Knickwinkel $\alpha_{Knick}$ eine Unbekannte, wenn keine zusätzlichen Mittel zur Detektion des Knickwinkels $\alpha_{Knick}$ vorgesehen sind. Hierdurch ist es der Steuervorrichtung 42 nicht möglich, alle kritischen Fahrsituationen zu erkennen, in denen aktiv stark gelenkt wird, unabhängig von einer Gefällefahrt oder einer Fahrt in der Ebene.

Um die Koppelkraft $F_{Koppel}$ unter Verzicht auf einen zusätzlichen Sensor, wie beispielsweise eine Kamera, und eine hierfür erforderliche Auswerteeinheit dennoch bestimmen zu können, ist erfindungsgemäß vorgesehen, dass die Steuervorrichtung 42 zur Berechnung eines Korrekturfaktors K in Abhängigkeit von dem beim Vorliegen eines Schubbetriebes detektierten Lenkwinkel $\alpha_{Lenk}$ eingerichtet ist, um die aus dem mindestens einen Betriebsparameter, Abtriebsdrehmoment $M_A$ oder Stützmoment $M_{St}$, bestimmte, in Längsrichtung x wirkende Koppelkraft $F_{Koppel,x}$ im Kuppelpunkt 72 unter Berücksichtigung des Lenkwinkels $\alpha_{Lenk}$ und eines theoretischen Knickwinkels $\alpha_{Knick,t}$ im Kuppelpunkt 72 zu korrigieren.

Somit lässt sich die Koppelkraft $F_{Koppel}$ im Kuppelpunkt 72 verallgemeinert gemäß der Gleichung

$$F_{Koppel} = F_{Koppel,x} * K(\alpha_{Lenk}, \alpha_{Knickk,t}) \ (1.2)$$

berechnen.

Insbesondere ist die Steuervorrichtung 42 zur Berechnung des theoretischen Knickwinkels $\alpha_{Knick,t}$ im Kuppelpunkt 72 unter Verwendung eines mathematischen Modells eingerichtet, welches den durch einen Lenkwinkelgeber detektierten Lenkwinkel $\alpha_{Lenk}$ berücksichtigt. Bei dem Lenkwinkel $\alpha_{Lenk}$, der maßgeblich für die Einstellung der Soll-Bahnkurve KB ist, handelt es sich vorzugsweise um den Lenkwinkel $\alpha_{Lenk}$ eines Lenkrades des Traktors 12. Der dem Lenkrad zugeordnete Lenkwinkelgeber ermöglicht es, aus den jeweiligen Lenkwinkel $\alpha_{Lenk}$ des Lenkrades abzuleiten.

Die Steuervorrichtung 42 ist beim Vorliegen eines Schubbetriebes dazu eingerichtet, die von der zweiten Bremsanlage 34 des Anhängers 14 erzeugte Bremskraft proportional zum detektierten Lenkwinkel $\alpha_{Lenk}$ anzusteuern.

Des Weiteren ist die Eingabe-Ausgabe-Einheit 68 der Steuervorrichtung 42 zur Eingabe und/oder Auswahl zumindest eines das Bremsverhalten des Zuges 10 beeinflussenden Parameters eingerichtet. Der zumindest eine Parameter ist aus der Gruppe Geometrie der Arbeitsvorrichtung, Anzahl der angekoppelten Arbeitsvorrichtungen, Beladungszustand, Umweltparameter, Zustand und/oder Leistungsfähigkeit der zweiten Bremsanlage 34.

Zudem kann der zumindest eine Parameter ein vorgebbarer Verstärkungsfaktor zur Einstellung der von der zweiten Bremsanlage 34 aufgebrachten Bremskraft sein. Der vorgebare Verstärkungsfaktor hat einen Wert größer Null. Wobei ein Verstärkungsfaktor zwischen Null und Eins zu einer geringeren Aggressivität beim Bremsen führt, während ein Verstärkungsfaktor größer Eins ein aggressiveres Bremsverhalten bewirkt.

Dadurch kann die Bedienperson des Traktors 12 auf das Bremsverhalten des Zuges 10 Einfluss nehmen. Neben den spezifischen Bedingungen, die von dem oder den angekoppelten Anhängern 14 abhängig sind, lassen sich auch individuelle Bedürfnisse der Bedienperson berücksichtigen. Bevorzugt kann die Eingabe-Ausgabe-Einheit 68 zur Einstellung und/oder Auswahl des zumindest einen das Bremsverhalten des Zuges 10 beeinflussenden Parameters eine eigene Menüstruktur aufweisen. Mittels der Menüstruktur kann die Bedienperson bei der Eingabe und/oder Auswahl unterstützt werden.

**Bezugszeichenliste**

| | | | |
|---|---|---|---|
| 10 | Landwirtschaftlicher Zug | 76 | Längsachse von 14 |
| 12 | Traktor | $\alpha_{Lenk}$ | Lenkwinkel |
| 14 | Anhänger | $\alpha_{Knick}$ | Knickwinkel |
| 16 | Vorderachse | $\alpha_{Knick,t}$ | Theoretischer Knickwinkel |
| 18 | Hinterachse | $F_{Koppel}$ | Koppelkraft |
| 20 | Bodeneingriffsmittel | $F_{Koppel,x}$ | Koppelkraft |
| 22 | Antriebsmotor | $F_{Koppel,y}$ | Koppelkraft |
| 24 | Getriebe | KB | Kurvenbahn |
| 26 | Antriebsstrang | $M_A$ | Abtriebsdrehmoment |
| 28 | Hydrostat | $M_{St}$ | Stützmoment |
| 30 | Hydrostat | MP | Momentanpol |
| 32 | Erste Bremsanlage | $n_a$ | Ausgangsdrehzahl |
| 34 | Zweite Bremsanlage | $n_i$ | Eingangsdrehzahl |
| 36 | Bremse | $P_1$ | Druck |
| 38 | Anhängerachse | $P_2$ | Druck |
| 40 | Anhängerbremsventil | $v_a$ | Geschwindigkeitsvektor |
| 42 | Steuervorrichtung | $v_t$ | Geschwindigkeitsvektor |
| 44 | Fahrerkabine | | |
| 46 | Mechanisches Teilgetriebe | | |
| 48 | Hydrostatisches Teilgetriebe | | |
| 50 | Planetengetriebe | | |
| 52 | Hydraulikleitung | | |
| 54 | Hydraulikleitung | | |
| 56 | Kupplung | | |
| 58 | Drucksensor | | |
| 60 | Drucksensor | | |
| 62 | Drehzahlsensor | | |
| 64 | Drehzahlsensor | | |
| 66 | Bremsleitung | | |
| 68 | Eingabe-Ausgabe-Einheit | | |
| 70 | Deichsel | | |
| 72 | Kuppelpunkt | | |

74        Längsachse von 12

## Patentansprüche

1. Landwirtschaftlicher Zug (10), umfassend einen Traktor (12) als Zugfahrzeug, der durch einen mit einem stufenlosen Getriebe (24) zusammenwirkenden Antriebsmotor (22) angetrieben ist und eine erste Bremsanlage (32) aufweist, und mindestens einen an den Traktor (12) in einem Kuppelpunkt (72) angekoppelten Anhänger (14), der eine zweite Bremsanlage (34) aufweist, wobei der Traktor (12) zur Regelung mindestens einer Bremsanlage (32, 34) des landwirtschaftlichen Zuges (10) eine Steuervorrichtung (42) aufweist, die zur Betätigung mindestens einer der Bremsanlagen (32, 34) des Zuges (10) in Abhängigkeit eines ermittelten Schubbetriebes des Zuges (10) und/oder Zugfahrzeuges (12) ausgebildet und eingerichtet ist, wobei die Steuervorrichtung (42) zur Bestimmung des Vorliegens eines Schubbetriebes in Abhängigkeit mindestens eines Betriebsparameters des Getriebes (24) und/oder des Antriebsmotors (22) eingerichtet ist, **dadurch gekennzeichnet, dass** die Steuervorrichtung (42) zur Berechnung eines Korrekturfaktors (K) in Abhängigkeit von einem beim Vorliegen eines Schubbetriebes detektierten Lenkwinkel ($\alpha_{Lenk}$) eingerichtet ist, um eine aus dem mindestens einen Betriebsparameter bestimmte Koppelkraft ($F_{Koppel,x}$) im Kuppelpunkt (72) unter Berücksichtigung des Lenkwinkels ($\alpha_{Lenk}$) zu korrigieren, wobei zur Bestimmung des Lenkwinkels ($\alpha_{Lenk}$) ein Lenkrad des Traktors (12) mit einem zugeordneten Lenkwinkelgeber vorgesehen ist, welcher den Lenkwinkel ($\alpha_{Lenk}$) als Steuersignal für die Steuervorrichtung (42) vorgibt, wobei die Steuervorrichtung (42) beim Vorliegen eines Schubbetriebes dazu eingerichtet ist, die von der zweiten Bremsanlage (34) erzeugte Bremskraft proportional zum detektierten Lenkwinkel ($\alpha_{Lenk}$) anzusteuern, wobei die Steuervorrichtung (42) zur Berechnung eines theoretischen Knickwinkels ($\alpha_{Knick,t}$) im Kuppelpunkt (72) unter Verwendung eines mathematischen Modells eingerichtet ist, der in die Berechnung des Korrekturfaktors (K) einfließt.

2. Landwirtschaftlicher Zug (10) nach Anspruch 1, **dadurch gekennzeichnet, dass** das stufenlose Getriebe (24) als mechanisches oder hydrostatisches Getriebe ausgeführt ist.

3. Landwirtschaftlicher Zug (10) nach Anspruch 2, **dadurch gekennzeichnet, dass** die Steuervorrichtung (42) dazu eingerichtet ist, ein Abtriebsdrehmoment ($M_A$) und/oder ein Stützmoment ($M_{St}$) des stufenlosen hydrostatischen Getriebes (24) aus einer Druckdifferenz in einem hydrostatischen Teilgetriebe (48) des Getriebes (24) zu bestimmen.

4. Landwirtschaftlicher Zug (10) nach Anspruch 3, **dadurch gekennzeichnet, dass** das aus der Druckdifferenz des hydrostatischen Teilgetriebes (48) bestimmte Abtriebsdrehmoment ($M_A$) als Führungsgröße bei der Ansteuerung der zweiten Bremsanlage (34) dient.

5. Landwirtschaftlicher Zug (10) nach einem der Ansprüche 1 bis 4, **dadurch gekennzeichnet, dass** die Steuervorrichtung (42) eine Eingabe-Ausgabe-Einheit (68) umfasst, welche zur Eingabe und/oder Auswahl zumindest eines das Bremsverhalten des Anhängers (14) beeinflussenden Parameters eingerichtet ist.

6. Landwirtschaftlicher Zug (10) nach Anspruch 5, **dadurch gekennzeichnet, dass** der zumindest eine Parameter aus der Gruppe Geometrie des Anhängers (14), Anzahl der angekoppelten Anhänger (14), Beladungszustand, Umweltparameter, Zustand und/oder Leistungsfähigkeit der zweiten Bremsanlage (34) ist.

7. Landwirtschaftlicher Zug (10) nach Anspruch 5 oder 6, **dadurch gekennzeichnet, dass** der zumindest eine Parameter ein vorgebbarer Verstärkungsfaktor zur Einstellung der von der zweiten Bremsanlage (34) aufgebrachten Bremskraft ist.

8. Landwirtschaftlicher Zug (10) nach Anspruch 7, **dadurch gekennzeichnet, dass** der vorgebare Verstärkungsfaktor einen Wert größer Null hat.

## Claims

1. An agricultural vehicle combination (10), comprising a tractor (12) as a traction vehicle which is driven by a propulsion engine (22) cooperating with a continuously variable transmission (24) and has a first braking system (32), and at least one trailer (14) coupled to the tractor (12) in a coupling point (72) and which has a second braking system (34), wherein, in order to regulate at least one braking system (32, 34) of the agricultural vehicle combination (10), the tractor (12) has a control device (42) which is constructed and configured to actuate at least one of the braking systems (32, 34) of the vehicle combination (10) as a function of a determined engine braking operation of the vehicle combination (10) and/or traction vehicle (12), wherein the control device (42) is configured to determine the presence of an engine braking operation as a function of at least one operating parameter of the transmission (24) and/or of the propulsion engine (22), **characterized in that** the control device (42) is configured to calculate a correction factor (K) as a function of a steering angle ($\alpha_{Lenk}$) detected when an engine braking operation is present, in order to correct a coupling force ($F_{Koppel,x}$) in the coupling point (72) from the at least one operating parameter taking the steering angle ($\alpha_{Lenk}$) into consideration, wherein, in order to determine the steering angle ($\alpha_{Lenk}$), a steering wheel of the tractor (12) is provided with an associated steering angle encoder which specifies the steering angle ($\alpha_{Lenk}$) as a control signal for the control device (42), wherein, when an engine braking operation is present, the control device (42) is configured to control the braking force produced by the second braking system (34) in proportion to the detected steering angle ($\alpha_{Lenk}$), wherein the control device (42) is configured to use a mathematical model in order to calculate a theoretical buckling angle ($\alpha_{Knick,t}$) in the coupling point (72), which is fed into the calculation of the correction factor (K).

2. The agricultural vehicle combination (10) according to claim 1, **characterized in that** the continuously variable transmission (24) is configured as a mechanical or hydrostatic transmission.

3. The agricultural vehicle combination (10) according to claim 2, **characterized in that** the control device (42) is configured to determine an output torque ($M_A$) and/or a drag torque ($M_{St}$) of the continuously variable hydrostatic transmission (24) from a pressure difference in a hydrostatic sub-transmission (48) of the transmission (24).

4. The agricultural vehicle combination (10) according to claim 3, **characterized in that** the output torque ($M_A$) determined from the pressure difference of the hydrostatic sub-transmission (48) serves as a reference variable in the control of the second braking system (34).

5. The agricultural vehicle combination (10) according to one of claims 1 to 4, **characterized in that** the control device (42) comprises an input/output unit (68) which is configured for inputting and/or selecting at least one parameter influencing the braking behaviour of the trailer (14).

6. The agricultural vehicle combination (10) according to claim 5, **characterized in that** the at least one parameter is from the group: trailer (14) geometry, number of coupled trailers (14), loading status, environmental parameters, status and/or performance of the second braking system (34).

7. The agricultural vehicle combination (10) according to claim 5 or claim 6, **characterized in that** the at least one parameter is a specifiable gain factor for adjusting the braking force applied by the second braking system (34).

8. The agricultural vehicle combination (10) according to claim 7, **characterized in that** the specifiable gain factor has a value greater than zero.


**Revendications**

1. Train agricole (10), comprenant un tracteur (12) en tant que véhicule de traction, qui est entraîné par un moteur d'entraînement (22), coopérant avec une transmission à variation continue (24), et présente une première installation de freinage (32), et comprenant au moins une remorque (14) qui est couplée au tracteur (12) en un point d'accouplement (72) et qui présente une deuxième installation de freinage (34), le tracteur (12) présentant un dispositif de commande (42) pour la régulation d'au moins une installation de freinage (32, 34) du train agricole (10), lequel dispositif de commande est réalisé et conçu pour l'actionnement d'au moins une des installations de freinage (32, 34) du train (10), en fonction d'un mode poussée déterminé du train (10) et/ou du véhicule de traction (12), le dispositif de commande (42) étant conçu pour la détermination de la présence d'un mode poussée, en fonction d'au moins un paramètre de fonctionnement de la transmission (24) et/ou du moteur d'entraînement (22), **caractérisé en ce que** le dispositif de commande (42) est conçu pour le calcul d'un coefficient de correction (K) en fonction d'un angle de braquage ($\alpha_{Lenk}$) détecté en présence d'un mode poussée, aux fins de corriger une force d'accouplement ($F_{Koppel,x}$) au point d'accouplement (72), à partir du paramètre de fonctionnement, au nombre d'au moins un, en tenant compte de l'angle de braquage ($\alpha_{Lenk}$), sachant que pour déterminer l'angle de braquage ($\alpha_{Lenk}$), un volant du tracteur (12) est prévu avec un capteur d'angle de braquage associé, qui prédéfinit l'angle de braquage ($\alpha_{Lenk}$) en tant que signal de commande pour le dispositif de commande (42), le dispositif de commande (42) étant conçu pour contrôler, en présence d'un mode poussée, la force de freinage produite par la deuxième installation de freinage (34), proportionnellement à l'angle de braquage ($\alpha_{Lenk}$) détecté, le dispositif de commande (42) étant conçu pour calculer un angle de fléchissement ($\alpha_{Knick,t}$) théorique dans le point d'accouplement (72), en utilisant un modèle mathématique, lequel angle entre dans le calcul du coefficient de correction (K).

2. Train agricole (10) selon la revendication 1, **caractérisé en ce que** la transmission à variation continue (23) est réalisée sous forme de transmission mécanique ou hydrostatique.

3. Train agricole (10) selon la revendication 2, **caractérisé en ce que** le dispositif de commande (42) est conçu pour déterminer un couple de sortie ($M_A$) et/ou un couple d'appui ($M_{St}$) de la transmission à variation continue (24) hydrostatique à partir d'une différence de pression dans une transmission hydrostatique élémentaire (48) de la transmission (24).

4. Train agricole (10) selon la revendication 3, **caractérisé en ce que** le couple de sortie ($M_A$) déterminé à partir de la différence de pression de la transmission hydrostatique élémentaire (48) sert de grandeur de référence lors de l'activation de la deuxième installation de freinage (34).

5. Train agricole (10) selon une des revendications 1 à 4, **caractérisé en ce que** le dispositif de commande (42) comprend une unité d'entrée-sortie (68) qui est conçue pour la sortie et/ou la sélection d'au moins un paramètre influençant le comportement de freinage de la remorque (14).

6. Train agricole (10) selon la revendication 5, **caractérisé en ce que** le paramètre, au nombre d'au moins un, appartient au groupe comprenant la géométrie de la remorque (14), le nombre de remorques (14) accouplées, l'état de charge, des paramètres d'environnement, l'état et/ou la capacité de performance de la deuxième installation de freinage (34).

7. Train agricole (10) selon la revendication 5 ou 6, **caractérisé en ce que** le paramètre, au nombre d'au moins un, est un facteur d'amplification pouvant être prédéfini en vue du réglage de la force de freinage produite par la deuxième installation de freinage (34).

8. Train agricole (10) selon la revendication 7, **caractérisé en ce que** le facteur d'amplification pouvant être prédéfini présente une valeur supérieure à zéro.

**Fig. 1**

Fig. 2

Fig. 3

EP 4 124 524 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2269880 B1

- EP 3533673 A1